# EUROPÄISCHE PATENTSCHRIFT

(11) **EP 2 526 759 B1**
(45) Veröffentlichungstag und Bekanntmachung des Hinweises auf die Patenterteilung: **02.03.2016**
(21) Anmeldenummer: 12003773.4
(22) Anmeldetag: 12.05.2012
(51) Int. Cl.: A01D 69/00, A01F 15/07, A01F 15/08

(54) **Kombination aus einem Zugfahrzeug und einer landwirtschaftlichen Aufsammelpresse**
Combination of a traction vehicle and an agricultural baler
Combinaison d'un véhicule de traction et d'une ramasseuse-presse agricole

(30) Priorität: 26.05.2011 DE 102011102525
(43) Veröffentlichungstag der Anmeldung: 28.11.2012
(73) Patentinhaber: Maschinenfabrik Bernard Krone GmbH, 48480 Spelle (DE)
(72) Erfinder: van Bassen, Aloys, 49832 Freren/Suttrup (DE)

(56) Entgegenhaltungen:
- EP-A1- 0 350 514
- EP-A1- 2 292 085
- EP-B1- 1 813 146
- DE-A1- 4 239 530
- DE-A1-102005 005 556
- US-B2- 6 942 595

## Beschreibung

Die Erfindung betrifft eine Kombination aus einem Zugfahrzeug und einer landwirtschaftlichen Aufsammelpresse gemäß dem Oberbegriff des Anspruchs 1. Aufsammelpressen werden zum Aufnehmen und Pressen von landwirtschaftlichem Erntegut, wie Stroh, Heu, Anwelkgut oder dergleichen eingesetzt. Dabei wird das auf dem Boden liegende Erntegut mit einer Aufnahmeeinrichtung aufgenommen und mit einem Schneid- oder Förderaggregat in eine vorzugsweise mit einem rückseitigen Auslass versehenen Presskammer mit Presseinrichtungen geleitet, in der der Rundballen gebildet wird. Dieser Rundballen wird in der Presskammer mit beispielsweise Netz oder Garn umwickelt, so dass der Ballen fest zusammengehalten wird. Um den Rundballen jedoch binden bzw. umwickeln zu können, ist es notwendig, die Erntegutzufuhr zu der Ballenkammer zu stoppen, was bei gewöhnlichen Aufsammelpressen nur durch eine Unterbrechung der Erntegutaufnahme möglich ist. Dieses bedeutet, dass der Fahrer kontinuierlich den Pressvorgang bzw. die von der Aufsammelpresse bereitgestellten Parameter, wie beispielsweise die Ballengröße verfolgen muss, um dementsprechend mit dem Zugfahrzeug anzuhalten bzw. anzufahren. In der EP 1 813 146 B1 wird vorgeschlagen, dieses Problem durch eine Verbindung von einer mit einem Ballengrößensensor verbundenen Steuerung der Ballenpresse zu einer Steuerung des Zugfahrzeugs zu lösen, welche bei einer zuvor bestimmten Ballengröße ein Haltesignal übermittelt, so dass das Zugfahrzeug automatisch stoppt. Diese automatische Steuerung stellt eine Entlastung des Fahrers dar. Dadurch, dass jedoch das Zugfahrzeug und die Ballenpresse permanent während des Bindens bzw. Umwickelns des Ballens für längere Zeit gestoppt werden müssen, entstehen lange Standzeiten und somit erhebliche Zeitverluste, die die Gesamttagesleistung der Ballenpresse erheblich beeinträchtigen.

Deshalb ist es Aufgabe der Erfindung, eine Kombination aus einem Zugfahrzeug und einer Aufsammelpresse zu schaffen, welche mit geringen Mitteln die entstehenden Zeitverluste bei den Arbeitsvorgängen der Aufsammelpresse minimiert.

Erfindungsgemäß wird diese Aufgabe durch die Merkmale des Anspruchs 1 gelöst. Vorteilhafte Ausgestaltungen sind Gegenstand der weiteren Ansprüche.

Nach der Erfindung wird eine Kombination aus einem Zugfahrzeug und einer landwirtschaftlichen Aufsammelpresse zum Bilden von Rundballen aus Erntegut bereitgestellt, wobei das Zugfahrzeug einen Antriebsmotor, welcher mit einer Hauptantriebswelle der Aufsammelpresse verbunden ist und eine Steuer- und Regeleinrichtung aufweist und wobei die Aufsammelpresse u. a. eine Presskammer mit Presseinrichtungen, eine Wickelvorrichtung zum Einwickeln des fertigen Rundballens mit Wickelmaterial in der Presskammer und zumindest eine mit einer Steuer- und Regeleinrichtung der Aufsammelpresse verbundene Einrichtung zur Erfassung von Betriebszuständen aufweist, wobei die Steuer- und Regeleinrichtung der Aufsammelpresse über eine BUS-Leitung mit der Steuer- und Regeleinrichtung des Zugfahrzeugs verbunden ist und die Steuer- und Regeleinrichtung der Aufsammelpresse über die BUS-Leitung dem Zugfahrzeug ein Drehzahl-Sollwertsignal in Abhängigkeit der Betriebszustände der Aufsammelpresse bereitstellt, worauf die Steuer- und Regeleinrichtung des Zugfahrzeugs eine Anpassung der Antriebsdrehzahl der Aufsammelpresse veranlasst, wobei das von der Steuer- und Regeleinrichtung der Aufsammelpresse bereitgestellte Drehzahl-Sollwertsignal von den verschiedenen Wickelphasen in der Presskammer der Aufsammelpresse abhängt.

Gemäß der Erfindung wird eine Kombination aus einem Zugfahrzeug und einer Aufsammelpresse bereitgestellt, welche über eine BUS-Leitung verbunden sind, mit der u. a. Signale in Abhängigkeit von den Betriebszuständen der Aufsammelpresse übermittelt werden, so dass die Antriebsdrehzahl des Zugfahrzeugs den entsprechenden Zuständen angepasst wird. Unter dem verwendeten Ausdruck "Anpassung" soll in diesem Zusammenhang kein Ein- und Ausschalten der Antriebswelle des Zugfahrzeugs, sondern vielmehr eine Erhöhung bzw. eine Verringerung der Antriebsdrehzahl verstanden werden. Die zuvor genannte Kombination besteht aus einem von einem Motor angetriebenen landwirtschaftlichen Zugfahrzeug, wie beispielsweise einem Schlepper, und einer landwirtschaftlichen Aufsammelpresse zum Bilden von Rundballen aus Erntegut, welche über eine Zugvorrichtung und eine Antriebswelle an das Zugfahrzeug gekoppelt ist. Das Zugfahrzeug weist eine Steuer- und Regeleinrichtung auf, welche mit einem Getriebeblock des Zugfahrzeugs in Verbindung steht. Die Aufsammelpresse zum Pressen von landwirtschaftlichem Erntegut umfasst antreibbare Elemente, welche von der Antriebswelle des Zugfahrzeugs angetrieben werden und Einrichtungen zur Erfassung von Betriebszuständen der Aufsammelpresse. Diese Einrichtungen zur Erfassung von Betriebszuständen der Aufsammelpresse sind mit einer Steuer- und Regeleinrichtung der Aufsammelpresse verbunden. Diese Steuer- und Regeleinrichtung kommuniziert über eine BUS-Leitung mit der Steuer- und Regeleinrichtung des Zugfahrzeugs. Diese wird vorzugsweise als ISO-BUS-Leitung nach der Norm ISO 11783 ausgebildet. Die Einrichtungen zur Erfassung der Betriebszustände können u. a. sowohl als Sensoreinrichtungen für die Erfassung der verschiedenen Phasen der Netz- bzw. Garnbindung als auch für die Erfassung der Ballengröße bzw. Ballenfestigkeit ausgebildet sein. Das zumindest eine von der Sensoreinrichtung erzeugte Signal wird von der Steuer- und Regeleinrichtung der Aufsammelpresse erfasst und an die Steuer- und Regeleinrichtung des Zugfahrzeugs weitergeleitet, welche den Getriebeblock veranlasst, die Drehzahlanpassung der Antriebswelle an die Betriebszustände der Aufsammelpresse einzuleiten. Zur Erhöhung bzw. Senkung der Antriebswellendrehzahl gibt es verschiedene Möglichkeiten. Gewöhnlich wurde die Drehzahl der Antriebswelle bisher über ein Übersetzungsgetriebe in Stufen (540 U/min und 1000 U/min) geschaltet. Moderne Zugfahrzeuge, insbesondere die der höheren Leistungsklassen, bieten mittlerweile bereits besonders vorteilhafte stufenlos geregelte Zapfwellenantriebe, welche unabhängig von der Motordrehzahl geregelt werden können. Durch die erfindungsgemäße Ausführung der Kombination von einem Zugfahrzeug und einer Aufsammelpresse wird mit geringem Aufwand eine Anpassung der Antriebsgeschwindigkeiten an die Betriebszustände der Aufsammelpresse ermöglicht. Wesentlicher Vorteil dieser Ausführung ist die Zeiteinsparung. Durch die Erhöhung der Antriebsdrehzahl beispielsweise während des Binde- bzw. Wickelvorgangs, wird der Rundballen schneller umwickelt und somit auch schneller aus der Ballenkammer ausgeworfen. Dadurch wird der gesamte Zeitablauf der Aufsammelpresse verkürzt, was wiederum die Tagesleistungen der Aufsammelpresse erhöht und Kosten einspart. Bei kontinuierlich arbeitenden Aufsammelpressen wird vorteilhaft die Zeit der Zwischenspeicherung des Ernteguts enorm verkürzt, so dass auch der Raum zur Zwischenspeicherung klein gehalten werden kann. Weiterhin ergeben sich insbesondere bei einer Umwicklung des Rundballens mit Bindegarn im Vergleich zu einer Umwicklung des Rundballens mit einem breitflächigen Netz enorme Zeiteinsparungen, da der Rundballen bei der Bindung mit Bindegarn häufiger umwickelt werden muss als bei einer Umwicklung mit Netz. Beispielsweise sind bei der Umwicklung des Rundballens mit einem Garnfaden etwa achtmal so viele Umwicklungen erforderlich als bei der Umwicklung mit Netz, was dementsprechend viel Zeit in Anspruch nimmt. Durch die erfindungsgemäße Anpassung der Antriebsgeschwindigkeit kann die dafür anfallende Zeit erheblich verkürzt werden.

Weitere Vorteile und Einzelheiten der Erfindung ergeben sich aus einem in der Zeichnung dargestellten Ausführungsbeispiel, das im Folgenden beschrieben wird.

In der Zeichnung zeigt:

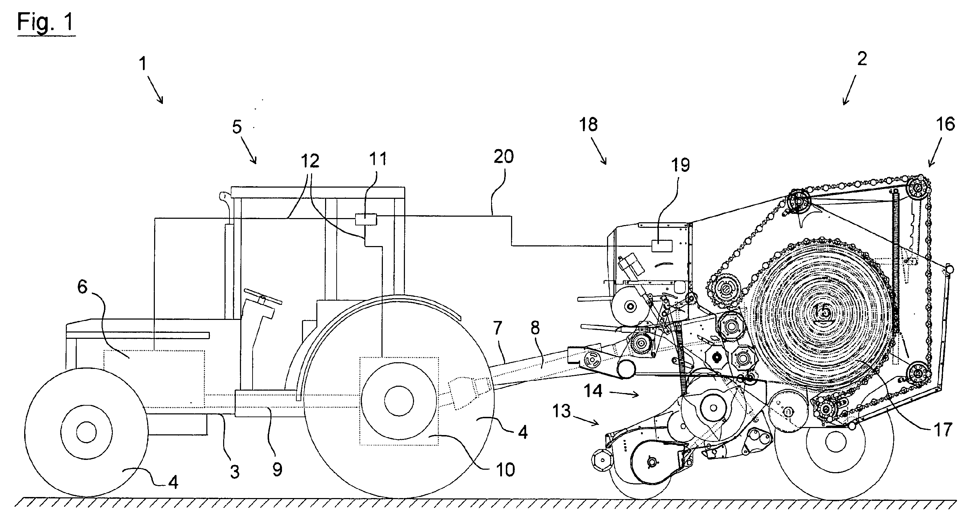

- Fig. 1:: eine schematische seitliche Ansicht einer erfindungsgemäßen Kombination aus einem Zugfahrzeug und einer landwirtschaftlichen Aufsammelpresse, wobei nicht erfindungsrelevante Bauteile teils nicht dargestellt sind

Die in der Fig. 1 ganz allgemein dargestellte erfindungsgemäße Kombination setzt sich aus einem landwirtschaftlich nutzbaren Zugfahrzeug 1 und einer Aufsammelpresse 2 zum Aufnehmen und Pressen von landwirtschaftlichem Erntegut, wie beispielsweise Heu oder Stroh, zusammen, wobei das Zugfahrzeug 1 als ein Traktor und die Aufsammelpresse 2 als eine allgemein bekannte landwirtschaftliche Rundballenpresse ausgebildet ist. Das Zugfahrzeug 1 weist im Wesentlichen ein einen Rahmen aufweisendes Fahrgestell 3, welches gegenüber der Bodenoberfläche über Räder 4 abgestützt ist, eine Fahrerkabine 5 und einen Antriebsmotor 6 zum Antrieb des Zugfahrzeugs 1 auf. Die Aufsammelpresse 2 ist über eine Deichseleinrichtung 7 und eine Hauptantriebswelle 8 an das Zugfahrzeug 1 gekoppelt, wobei die Hauptantriebswelle 8 mit einem über eine weitere Antriebswelle 9 mit dem Antriebsmotor 6 in Verbindung stehenden Getriebeblock 10 gekoppelt ist. Darüber hinaus weist das Zugfahrzeug 1 eine elektronische Steuer- und Regeleinrichtung 11 auf, welche über interne BUS-Verbindungen 12 des Zugfahrzeugs 1 ebenfalls mit dem Getriebeblock 10 und dem Antriebsmotor 6 verbunden ist, so dass die Steuer- und Regeleinrichtung 11 Informationen, wie beispielsweise die Fahrgeschwindigkeit zur Verfügung stellen bzw. Funktionen des Zugfahrzeugs 1 steuern kann, wie beispielsweise eine Veränderung der Antriebswellendrehzahl.

Die Aufsammelpresse 2 ist in diesem Ausführungsbeispiel als eine absetzig arbeitende Rundballenpresse mit einer variablen Ballenkammer für unterschiedliche Ballendurchmesser ausgebildet. Die Aufsammelpresse 2 umfasst im Wesentlichen eine Aufnahmeeinrichtung 13 zur Aufnahme des auf dem Boden liegenden Ernteguts, eine Fördereinrichtung 14 zum Befördern des Ernteguts in die Aufsammelpresse 2, eine Presskammer 15, welche größtenteils von einer durch die Hauptantriebswelle 8 angetriebene Presseinrichtung 16 zum Bilden eines Rundballens 17 umgeben ist, eine Wickelvorrichtung 18 zum Einwickeln des fertigen sich drehenden Rundballens 17 mit Wickelmaterial in der Presskammer 15 und eine elektronische Steuer- und Regeleinrichtung 19. Des Weiteren weist die Aufsammelpresse 2 mehrere, nicht dargestellte, Sensoren zur Erfassung der Betriebszustände der Aufsammelpresse 2 auf, welche mit der elektronischen Steuer- und Regeleinrichtung 19 der Aufsammelpresse 2 in Verbindung stehen. Die Steuer- und Regeleinrichtung 19 der Aufsammelpresse 2 ist zum Austausch von Daten und Steuerbefehlen über eine BUS-Leitung 20 mit der Steuer- und Regeleinrichtung 11 des Zugfahrzeugs 1 verbunden, wobei die BUS-Leitung 20 vorteilhaft als eine genormte ISO-BUS-Verbindung ausgeführt ist.

Da die anfangs beschriebenen Standzeiten der Aufsammelpresse 2 während des Umwickelns des Rundballens 17 mit Wickelmaterial die Tagesleistung der Aufsammelpresse 2 enorm beeinträchtigen, ist es vorgesehen, diese Standzeiten zu minimieren. Dieses wird erfindungsgemäß durch eine Erhöhung der Drehzahl der Hauptantriebswelle 8 erreicht, so dass die Presseinrichtungen 16 schneller angetrieben werden. Da eine solche Erhöhung der Drehzahl der Hauptantriebswelle 8 jedoch nicht während des gesamten Arbeitsablaufes der Aufsammelpresse 2, also auch während des Pressens des Rundballens 17, bezüglich sicherer und optimaler Pressvorgänge sinnvoll ist, ist es vorgesehen, die Drehzahl der Hauptantriebswelle 8 lediglich während des Umwickelns des Rundballens 17 mit Wickelmaterial zu erhöhen. Dazu wird ein vorbestimmter Betriebszustand der Aufsammelpresse 2, beispielsweise von Sensoren für den Ballendurchmesser bzw. für die Ballenfestigkeit oder auch für die verschiedenen Phasen der Einwicklung des Rundballens 17, erfasst und als Signal über die Steuer- und Regeleinrichtung 19 der Aufsammelpresse 2 an die Steuer- und Regeleinrichtung 11 des Zugfahrzeugs 1 weitergeleitet und der mit dem Antriebsmotor verbundene Getriebeblock 10 betätigt, welcher eine vorzugsweise stufenlose Erhöhung bzw. Senkung der Drehzahl der Hauptantriebswelle 8 veranlasst. Dadurch werden die Presseinrichtungen 16, welche im Wesentlichen über ein in der Figur nicht gekennzeichnetes Hauptgetriebe mit der Hauptantriebswelle 8 gekoppelt sind, während des Umwickelns des Rundballens 17 mit Wickelmaterial schneller angetrieben, so dass sich der Rundballen 17 in der Presskammer 15 schneller dreht und die Zeit zum Einwickeln des Rundballens 17 mit Wickelmaterial erheblich verkürzt wird.

Somit ist eine Kombination aus einem Zugfahrzeug 1 und einer Aufsammelpresse 2 bereitgestellt, welche mit geringen Mitteln die Arbeitsabläufe der Aufsammelpresse 2 durch eine Verringerung der Standzeiten optimiert.

## Patentansprüche

1. Kombination aus einem Zugfahrzeug (1) und einer landwirtschaftlichen Aufsammelpresse (2) zum Bilden von Rundballen (17) aus Erntegut, wobei das Zugfahrzeug (1) einen Antriebsmotor (6), welcher mit einer Hauptantriebswelle (8) der Aufsammelpresse (2) verbunden ist und eine Steuer- und Regeleinrichtung (11) aufweist und wobei die Aufsammelpresse (2) u. a. eine Presskammer (15) mit Presseinrichtungen (16), eine Wickelvorrichtung (18) zum Einwickeln des fertigen Rundballens (17) mit Wickelmaterial in der Presskammer (15) und zumindest eine mit einer Steuer- und Regeleinrichtung (19) der Aufsammelpresse (2) verbundene Einrichtung zur Erfassung von Betriebszuständen aufweist, wobei die Steuer- und Regeleinrichtung (19) der Aufsammelpresse (2) über eine BUS-Leitung (20) mit der Steuer- und Regeleinrichtung (11) des Zugfahrzeugs (1) verbunden ist, **dadurch gekennzeichnet, dass** die Steuer- und Regeleinrichtung (19) der Aufsammelpresse (2) über die BUS-Leitung (20) dem Zugfahrzeug (1) ein Drehzahl-Sollwertsignal in Abhängigkeit der Betriebszustände der Aufsammelpresse (2) bereitstellt, worauf die Steuer- und Regeleinrichtung (11) des Zugfahrzeugs (1) eine Anpassung der Antriebsdrehzahl der Aufsammelpresse (2) veranlasst, wobei das von der Steuer- und Regeleinrichtung (19) der Aufsammelpresse (2) bereitgestellte Drehzahl-Sollwertsignal von den verschiedenen Wickelphasen in der Presskammer (15) der Aufsammelpresse (2) abhängt.

2. Kombination nach Anspruch 1, **dadurch gekennzeichnet, dass** das Drehzahl-Sollwertsignal, welches von der Steuer- und Regeleinrichtung (19) der Aufsammelpresse (2) über die BUS-Leitung (20) dem Zugfahrzeug (1) bereitgestellt wird, eine Erhöhung oder Verringerung der Antriebsdrehzahl der Aufsammelpresse (2) veranlasst.

3. Kombination nach zumindest einem der vorhergehenden Ansprüche, **dadurch gekennzeichnet, dass** zumindest während des größten Zeitabschnittes der Wickelphase die Antriebsdrehzahl der Aufsammelpresse (2) erhöht wird.

4. Kombination nach zumindest einem der vorhergehenden Ansprüche, **dadurch gekennzeichnet, dass** die Antriebsdrehzahl der Aufsammelpresse (2) unabhängig von der Motordrehzahl geregelt wird.

5. Kombination nach zumindest einem der vorhergehenden Ansprüche, **dadurch gekennzeichnet, dass** die Aufsammelpresse (2) vorzugsweise als eine kontinuierlich arbeitende Presse ausgebildet ist.

## Claims

1. Combination of a towing vehicle (1) and an agricultural pick-up baler (2) for producing round bales (17) of crops, the towing vehicle (1) comprising a drive motor (6) which is connected to a main drive shaft (8) of the pick-up baler (2), and an open- and closed-loop control apparatus (11), and the pick-up baler (2) comprising, *inter alia,* a press chamber (15) having press apparatuses (16), a wrapping device (18) for wrapping the finished round bales (17) in wrapping material within the press chamber (15), and at least one apparatus for determining operating statuses which is connected to an open- and closed-loop control apparatus (19) of the pick-up baler (2), the open- and closed-loop control apparatus (19) of the pick-up baler (2) being connected to the open- and closed-loop control apparatus (11) of the towing vehicle (1) via a bus cable (20), **characterised in that** the open- and closed-loop control apparatus (19) of the pick-up baler (2) provides the towing vehicle (1), via the bus cable (20), with a target speed signal based on the operating statuses of the pick-up baler (2), whereupon the open- and closed-loop control apparatus (11) of the towing vehicle (1) causes the drive speed of the pick-up baler (2) to be adjusted, the target speed signal provided by the open- and closed-loop control apparatus (19) of the pick-up baler (2) being dependent on the different wrapping stages in the press chamber (15) of the pick-up baler (2).

2. Combination according to claim 1, **characterised in that** the target speed signal which is provided to the towing vehicle (1) by the open- and closed-loop control apparatus (19) of the pick-up baler (2), via the bus cable (20), causes the drive speed of the pick-up baler (2) to either be increased or decreased.

3. Combination according to at least one of the preceding claims, **characterised in that** the drive speed of the pick-up baler (2) is increased at least during the longest time period of the wrapping stage.

4. Combination according to any of the preceding claims, **characterised in that** the drive speed of the pick-up baler (2) is controlled independently of the speed of the engine.

5. Combination (1) according to at least one of the preceding claims, **characterised in that** the pick-up baler (2) is preferably designed as a continuously operating press.

## Revendications

1. Combinaison d'un véhicule tracteur (1) et d'une presse ramasseuse agricole (2) pour la formation de balles rondes (17) de produits récoltés, dans laquelle le véhicule tracteur (1) comporte un moteur d'entraînement (6) qui est relié à un arbre d'entraînement principal (8) de la presse ramasseuse (2) et un dispositif de commande et de régulation (11), et la presse ramasseuse (2) comprend notamment une chambre de compression (15) équipée de dispositif de compression (16), un dispositif d'enroulement (18) pour permettre d'enrouler les balles rondes (17) finies avec un matériau d'enroulement dans la chambre de compression (15) et au moins un dispositif de détection d'états de fonctionnement relié à un dispositif de commande et de régulation (19) de la presse ramasseuse (2), le dispositif de commande et de régulation (19) de la presse ramasseuse (2) étant relié au dispositif de commande et de régulation du véhicule tracteur (1) par une ligne bus (20),
**caractérisé en ce que**
le dispositif de commande et de régulation (19) de la presse ramasseuse (2) fournit au véhicule tracteur (1) par l'intermédiaire de la ligne bus (20) un signal de valeur de consigne de la vitesse de rotation en fonction de l'état de fonctionnement de la presse ramasseuse (2), en réponse auquel le dispositif de commande et de régulation (11) du véhicule tracteur (1) effectue une adaptation de la vitesse de rotation d'entraînement de la presse ramasseuse (2), le signal de valeur de consigne de la vitesse de rotation fourni par le dispositif de commande et de régulation (19) de la presse ramasseuse (2) dépendant des différentes phases d'enroulement dans la chambre de compression (15) de la presse ramasseuse (2).

2. Combinaison conforme à la revendication 1,
**caractérisée en ce que**
le signal de valeur de consigne de la vitesse de rotation qui est fourni par le dispositif de commande et de régulation (19) de la presse ramasseuse (2) au véhicule tracteur (1) par la ligne bus (20) commande une augmentation ou une diminution de la vitesse de rotation d'entraînement de la presse ramasseuse (2).

3. Combinaison conforme à au moins l'une des revendications précédentes,
**caractérisée en ce qu'**
au moins pendant la plus grande partie de la phase d'entraînement, la vitesse de rotation d'entraînement de la presse ramasseuse (2) est augmentée.

4. Combinaison conforme à au moins l'une des revendications précédentes,
**caractérisée en ce que**
la vitesse de rotation d'entraînement de la presse ramasseuse (2) est réglée indépendamment de la vitesse de rotation du moteur.

5. Combinaison conforme à au moins l'une des revendications précédentes,
**caractérisée en ce que**
la presse ramasseuse (2) est réalisée de préférence sous la forme d'une presse travaillant en continu.
